# EUROPEAN PATENT APPLICATION

(11) **EP 1 600 307 A2**
(43) Date of publication of application: **30.11.2005**
(21) Application number: 05011535.1
(22) Date of filing: 27.05.2005
(51) Int. Cl.: B60C 23/04

(54) **Tire information detecting apparatus having improved reception sensitivity**

(30) Priority: 28.05.2004 JP 2004159688; 12.07.2004 JP 2004204637
(71) Applicant: ALPS ELECTRIC CO., LTD., Tokyo 145-8501 (JP)
(72) Inventor: Iijima, Kouta, Ota-ku Tokyo, 145-8501 (JP)
(74) Representative: Klunker . Schmitt-Nilson . Hirsch

(57) **Abstract**

A tire information detecting apparatus includes an interrogator (40) provided to the main body of a vehicle and each of the responders (20) provided to each of the tires (11) of the vehicle and responding to the interrogator (40). Each of antenna units (30) having an antenna, a mixer, and a branching filter is provided in the vicinity of each of the tires and is connected to the interrogator via cables. The mixer includes an interactive mixer, which has a first port and a second port connected interactively with each other, and a third port. The first port of the mixer is connected to the antenna, the second port is connected to the high frequency side port of the branching filter, the third port is connected to the low frequency side port of the branching filter, and a common port of the branching filter is connected to the cables.

## Description

### BACKGROUND OF THE INVENTION

### 1. Field of the Invention

The present invention relates to a tire information detecting apparatus for detecting tire information such as air pressure or temperature in tires.

### 2. Description of the Related Art

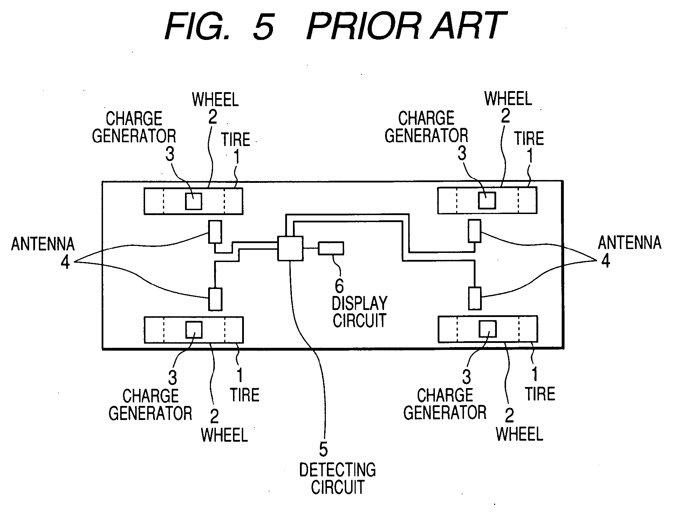

A conventional tire information (air pressure) detecting apparatus will be described with reference to Fig. 5. Pressure-detection-type charge generators 3 are mounted in the wheels 2 of the tires 1 mounted on a vehicle, respectively, and antennas 4 for receiving electrical waves are provided in the wheelhouses on the vehicle body, respectively.

The antennas 4 are connected to a detecting circuit 5, and the detecting circuit 5 is connected to a display circuit 6. In each of the wheels 2, the pressure-detection-type charge generator 3 is fixed at the edge of each wheel rim portion by clamping, and static electricity generated by a charge generator 3 is charged on the inner surface of each tire. When the charge exceeds predetermined capacity, the charge is discharged and the discharged charge is detected as electrical waves by the antennas 4 (for example, see Japanese Unexamined Patent Application Publication No. 11-99812 (Fig. 1)).

Since the electrical waves received by the antennas 4 are transmitted to the detecting circuit 5 via cables, there has been a problem in that transmission loss caused by the cables is increased thereby lowering sensitivity. In addition, when the low transmission loss cables are used, cost is increased.

### SUMMARY OF THE INVENTION

Accordingly, the present invention has been made to solve the above-mentioned problems, and it is an object of the present invention to improve the reception sensitivity by reducing the transmission loss generated between antennas for receiving electrical waves emitted from tires and a detecting circuit.

In order to achieve the above object, the present invention provides a tire information detecting apparatus including: an interrogator provided in the main body of a vehicle, for sending an interrogation signal including a modulation period and a non-modulation period, and for processing tire information such as tire air pressure; and responders provided to each of the tires in the vehicle, for sending a response signal in which a tire information signal is superimposed and which has the same as the frequency of the interrogation signal, to the interrogator through cables in the non-modulation period. In this case, each of antenna units including an antenna, a mixer, and a branching filter is provided in the vicinity of each of the tires and is connected to the interrogator through each of the cables, and the mixer includes an interactive mixer which has a first port and a second port connected interactively with each other, and a third port. The first port of the mixer is connected to the antenna, the second port is connected to a high frequency side port of the branching filter, the third port is connected to a low frequency side port of the branching filter, and a common port of the branching filter is connected to each of the cables.

In addition, the antenna, the mixer, and the branching filter are unitized on the same cable.

Further, the mixer includes a passive type balance mixer using diodes, and DC bias voltage is applied to the diodes of the mixer.

### BRIEF DESCRIPTION OF THE DRAWINGS

Fig. 1 is a block diagram generally illustrating a tire information detecting apparatus according to the present invention;
Fig. 2 is a circuit diagram of a responder and antenna unit in the tire information detecting apparatus according to the invention;
Fig. 3 is a circuit diagram of a mixer used in the antenna unit of the tire information detecting apparatus according to the invention;
Fig. 4 is a format of an interrogation signal in the tire information detecting apparatus according to the invention; and
Fig. 5 is a block diagram entirely illustrating a conventional tire information detecting apparatus.

### DESCRIPTION OF THE PREFERRED EMBODIMENTS

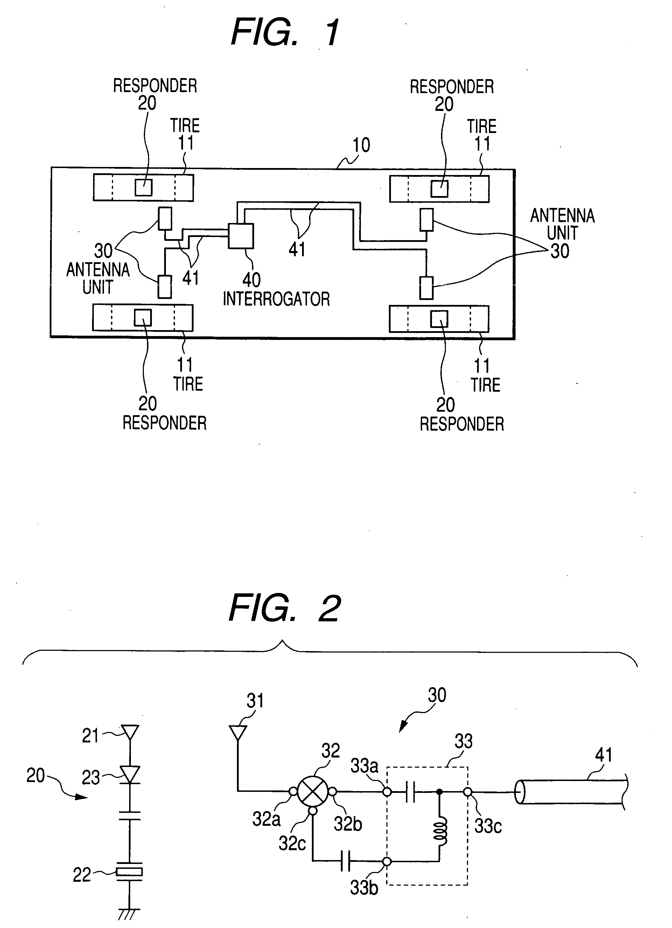

Hereinafter, a tire information detecting apparatus according to the present invention will be described in detail with reference to the accompanying drawings. The tire information detecting apparatus according to the invention is generally illustrated in Fig. 1. Each of the tires 11 mounted on a vehicle 10 has a responder 20 therein. In addition, in the main body of the vehicle 10, antenna units 30 disposed in the vicinity of each of the tires 11, and an interrogator 40 are provided. Further, each of the antenna units 30 and the interrogator 40 are connected therebetween by each of the cables 41.

The interrogation signals sent from the interrogator 40 are emitted from each of the antenna units 30 to each of the responders 20 and response signals including tire information such as air pressure in each of the tires 11 are emitted from each of the responders 20. Each of the antenna units 30 receives the response signals and detects the response signals so that the tire information is provided to the interrogator 40 through the cable 41.

Fig. 2 shows configurations of each of the responders 20 and the antenna unit 30. Each of the responders 20 includes an antenna 21, a diode 23 for both demodulation and modulation, and a sensor 22 combined with the diode 23. The sensor 22 is consisted of, for example, a resonator such as a crystal resonator changing a self-resonant frequency in response to air pressure. Accordingly, if excited at a frequency close to the self-resonant frequency, and the sensor 22 self-resonates.

Each of the antenna units 30 includes an antenna 31, a mixer 32 and a branching filter 33, and these are unitized on the same cable. The mixer 32 includes a first port 32a, a second port 32b and a third port 32c, and is consisted of a mixer having the first port 32a and the second port 32b connected interactively with each other. Further, the branching filter 33 is consisted of a bi-wave branching filter including a high frequency side port 33a, a low frequency side port 33b, and a common port 33c.

The first port 32a of the mixer 32 is connected to the antenna 31, the second port 32b is connected to the high frequency side port 33a of the branching filter 33, and the third port 32c is connected to the low frequency side port 33b of the branching filter 33. In addition, the common port 33c of the branching filter 33 is connected to the cable 41.

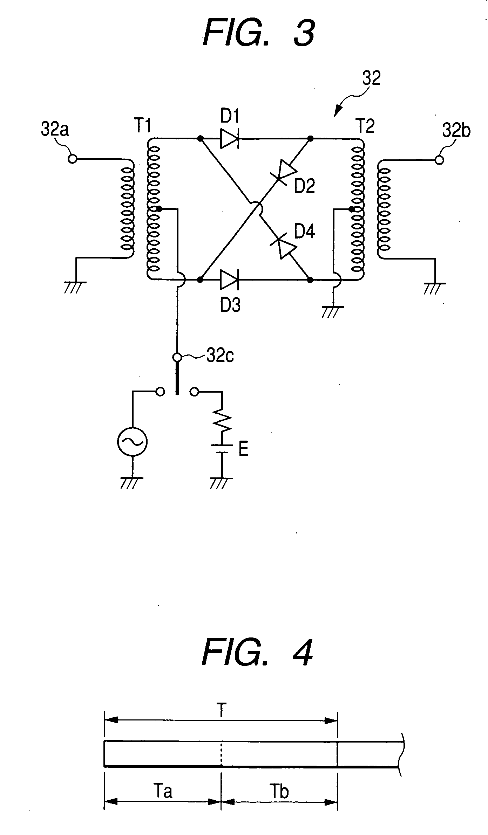

Fig. 3 shows an example of the mixer 32. The mixer is a double balance mixer having diodes. As the configuration of the mixer is well known, and one ends of unbalance side lines of two balun transformers T1 and T2 are connected to the first port 32a and the second port 32b, respectively, and the other ends thereof are grounded. Further, a midpoint of the balance side line of the balun transformer T1 is connected to the third port 32c, and a midpoint of the balance side line of the balun transformer T2 is grounded. Diodes D1 to D4 between the balance side lines are connected with each other in the form of a ring. As mentioned above, although the third port 32c is connected to the low frequency side port 33b of the branching filter 33, DC bias voltage E and a modulated wave are applied to the third port 32c upon being switched therebetween.

Next, operation of the tire information detecting apparatus according to the invention will be described. Although the typical tire information includes air pressure and air temperature in each of the tires, for convenience of description, detection of only air pressure in each of the tires will be described.

First of all, in one responder 20, as shown in Fig. 4, an interrogating signal is sent from the interrogator 40 for a period T. Carrier wave of the interrogating signal has a frequency of about 2.4 GHz, and the modulated wave has a frequency of about 10 MHz. The carrier wave is provided from each of the cables 41, and reaches the common port 33c of the branching filter 33. Since the branching filter 33 is constructed to sufficiently separate frequencies of 2.4 GHz and 10 MHz, the carrier wave is provided to the second port 32b of the mixer 32 through the high frequency side port 33a.

In an early transmission period Ta for the period T, the modulated wave is input to the third port 32c, and an amplitude-modulated interrogating signal is emitted from the antenna 31. In addition, in a late reception period Tb, DC bias voltage E is applied to the third port 32c, and a pair of diodes D1 and D2 are conducted. Accordingly, only the carrier wave is emitted from the antenna 31. This is also repeated for the other tires.

The sensor 22 in each of the responders 20 is selected so that the self-resonant frequency thereof is the same frequency as the modulated signal included in the interrogating signal, that is, 10 MHz, or a frequency close to 10 MHz. Since each of the responders 20 does not have energy for exciting the sensor 22, the sensor is not resonated. However, the interrogating signal is applied to the diode 23 through the antenna 21 and if the interrogating signal is demodulated at the diode 23, a modulated wave component having a frequency of 10 MHz is generated. If the modulated wave component is provided to the sensor 22, since the sensor 22 has a self-resonant frequency with a similar value of 10 MHz, the sensor 22 is excited by the modulated wave component and a signal having a self-resonant frequency is generated. The signal continues while progressively attenuating. For the reception period Tb, a carrier wave having a frequency of 2.4 GHz is amplitude-modulated by the diode 23, and then a response signal is generated. The response signal is emitted from the antenna 21.

The response signal is received at the antenna 31 of each of the antenna units 30 and is provided to the first port 32a of the mixer 32. That is, for the reception period Tb, a response signal (2.4 GHz) amplitude-modulated by a signal having the self-resonant frequency of the sensor 22 is input to the first port 32a.

Accordingly, in the mixer 32, the response signal is detected, and the signal having the self-resonant frequency of the sensor 22 is output from the third port 32c. The signal is provided to the low frequency side port 33b of each of the branching filters 33 and is sent to each of the cables 41 through the common port 33c. Since the self-resonant frequency is low as 10 MHz, transmission loss due to the cables 41 is reduced. Then the signal is provided to the interrogator 40 through each of the cables 41.

Since corresponding to the change of the air pressure in each of the tires, a change of the self-resonant frequency becomes tire information and is converted into air pressure data through the interrogator 40, thereby being displayed on each of the display units not shown.

Further, since the interrogation signal is high as 2.4 GHz, transmission loss caused by the cables increases. However, since the interrogator 40 is provided to the main body of a vehicle 10, power of the interrogation signal is easily increased by the voltage of the power source, such that transmission loss does not become a problem. Since each of the responders 20 do not have a power source, transmission loss of the response signal causes the reception sensitivity of the interrogator 40 to be reduced. However according to the configuration of the invention, it is possible to prevent the reception sensitivity from degrading.

According to a first aspect of the present invention, since each of antenna units including an antenna and a mixer is provided in the vicinity of each of the tires and is connected to an interrogator through each of cables, the mixer includes an interactive mixer which has a first port and a second port connected interactively with each other and a third port, the first port of the mixer is connected to the antenna, the second port is connected to a high frequency side terminal of a branching filter, the third port is connected to a low frequency side terminal of the branching filter, and a common port of the branching filter is connected to each of the cables, response signals are detected by each mixer and tire information signals having low frequencies are sent to the interrogator. Accordingly, it is possible to improve reception sensitivity of the interrogator by reducing the transmission loss due to the cables.

Further, according to a second aspect of the present invention, since the antennas, the mixer, and the branching filter are unitized on the same cable, it is easy to dispose the antenna unit in the vicinity of the tires, respectively.

In addition, according to a third aspect of the present invention, since the mixer is consisted of a passive type balance mixer using diodes and DC bias voltage is applied to the diodes of the mixer, interrogation signals can be easily emitted from the antenna units.

## Claims

1. A tire information detecting apparatu comprising:
an interrogator 40 provided to the main body of a vehicle 1, for sending an interrogation signal including a modulation period and a non-modulation period, and for processing tire information such as tire air pressure;
responders 20 provided to each of the tires 11 in the vehicle 1, for sending a response signal, in which a tire information signal is superimposed and which has the same frequency as the interrogation signal, to the interrogator 40 through cables 41 in the non-modulation period; and
antenna units 30 including an antenna 31, a mixer 32, and a branching filter 33 which are provided in the vicinities of the tires 11, respectively, and which are connected to the interrogator 40 through the cables 41,
**characterized in that** the mixer 32 includes an interactive mixer which has a first port 32a and a second port 32b connected interactively with each other, and a third port 32c, and
the first port 32a of the mixer 32 is connected to the antenna 31, the second port 32b is connected to a high frequency side port 33a of the branching filter 33, the third port 32c is connected to a low frequency side port 33b of the branching filter 33, and a common port 33c of the branching filter 33 is connected to each of the cables 41.

2. The tire information detecting apparatus according to claim 1,
**characterized in that** the antenna 31, the mixer 32, and the branching filter 33 are unitized on the same cable 41.

3. The tire information detecting apparatus according to claim 1 or 2,
**characterized in that** the mixer 32 includes a passive type balance mixer using diodes D1 to D4 and DC bias voltage is applied to the diodes D1 to D4 of the mixer 32.
